(19) Europäisches Patentamt
European Patent Office
Office européen des brevets

(11) **EP 4 455 469 A2**

(12) **EUROPEAN PATENT APPLICATION**

(43) Date of publication:
**30.10.2024 Bulletin 2024/44**

(51) International Patent Classification (IPC):
**F02C 9/28** (2006.01)

(21) Application number: **24172836.9**

(52) Cooperative Patent Classification (CPC):
**F02C 9/28**

(22) Date of filing: **26.04.2024**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.04.2023 US 202318307160**

(71) Applicant: **PRATT & WHITNEY CANADA CORP.
Longueuil, Québec J4G 1A1 (CA)**

(72) Inventors:
- **DION, Michel
  Longueuil, J4J 1A4 (CA)**
- **CRAINIC, Cristina
  Longueuil, J4N 1P6 (CA)**
- **JASINSKI, Juliana
  Montreal, H4A 1J6 (CA)**

(74) Representative: **Dehns
St. Bride's House
10 Salisbury Square
London EC4Y 8JD (GB)**

(54) **AIRCRAFT ENGINE CONTROL SYSTEM FOR MAINTAINING CONSTANT THRUST BELOW SEA LEVEL**

(57) A method of controlling an aircraft engine (20) includes determining a reference thrust that corresponds to a thrust setting parameter at a selected aircraft operating parameter for a current airspeed according to a predefined relationship. An adjustment factor is determined based on a relationship between the current aircraft operating parameter and the selected aircraft operating parameter. A prescribed thrust at the current aircraft operating parameter is determined by applying the adjustment factor to the reference thrust. A value of a thrust setting parameter that provides the prescribed thrust at the current aircraft operating parameter is used to operate the aircraft engine at the prescribed thrust.

FIG. 3

**Description**

**TECHNICAL FIELD**

The present disclosure relates generally to an aircraft engine control system and more specifically to an aircraft engine control system for tailoring engine thrust to a selected aircraft operating parameter.

**BACKGROUND**

An aircraft engine generates a controlled amount of thrust during flight. The amount of thrust generated by an engine is partially determined by ambient conditions and therefore a controller uses information indicative of the ambient conditions to control engine operation and thereby thrust. Thrust generated by the engine may not be directly measurable during aircraft operation and therefore measurable engine operating parameters are monitored and controlled to set a desired thrust. Such engine operating parameters can include, for example, shaft or rotor speed, engine temperature and engine pressure. The engine is then operated to provide a specific shaft speed, rotor speed, temperature, or pressure to set a desired thrust.

**SUMMARY**

According to an aspect of the present invention, a method of controlling an aircraft engine with an engine control system to set a prescribed thrust at a selected aircraft operating parameter independent of a thrust setting model that determines thrust based on a current aircraft operating parameter includes, among other possible things, determining a reference thrust that corresponds to a thrust setting parameter at the selected aircraft operating parameter for a current airspeed according to a predefined relationship, calculating an adjustment factor based on a relationship between the current aircraft operating parameter and the selected aircraft operating parameter, determining the prescribed thrust at the current aircraft operating parameter by applying the adjustment factor to the reference thrust, determining a value of the thrust setting parameter that provides the prescribed thrust at the current aircraft operating parameter according to a predefined relationship between the reference thrust and the current airspeed, and operating the aircraft engine based on the determined value of the thrust setting parameter to provide the prescribed thrust.

In an embodiment of the above, the selected aircraft operating parameter comprises a sea level altitude and the current aircraft operating parameter comprises the current altitude.

In another embodiment according to any of the previous embodiments, the thrust setting model is configured for determining a thrust based on the current altitude for altitudes above sea level and the prescribed thrust is determined independent of the thrust setting model to provide a constant thrust for operation at altitudes below sea level.

In another embodiment according to any of the previous embodiments, the method further comprises determining the thrust based on the thrust setting model in response to the aircraft operating at an altitude above sea level.

In another embodiment according to any of the previous embodiments, determining the reference thrust corresponding to the thrust setting parameter for a current airspeed according to the predefined relationship comprises looking up the reference thrust that corresponds to the current air speed, and the thrust setting parameter in a look-up table.

In another embodiment according to any of the previous embodiments, determining the thrust setting parameter value that corresponds with the prescribed thrust at the current airspeed comprises looking up the thrust setting parameter value that corresponds with the prescribed thrust at the current airspeed in a look-up table.

In another embodiment according to any of the previous embodiments, the thrust setting parameter comprises a rotational speed of an engine shaft.

In another embodiment according to any of the previous embodiments, the thrust setting parameter comprises at least one of a measured engine operating temperature and a measured engine operating pressure.

In another embodiment according to any of the previous embodiments, calculating the adjustment factor is based on a measured ambient pressure at the current altitude and a determined ambient pressure at sea level.

According to another aspect of the present invention, a method of controlling an aircraft engine with an engine control system to maintain a prescribed engine thrust at a value that corresponds to operation at sea level independent of a current altitude of an aircraft includes, among other possible things, determining a reference thrust that corresponds to a value of a thrust setting parameter at sea level for a current air speed according to a predefined relationship in response to operation below sea level, calculating an adjustment factor based on a relationship between a current altitude and sea level, determining the prescribed engine thrust at the current altitude by applying the adjustment factor to the reference thrust, determining the value of the thrust setting parameter that provides the prescribed engine thrust at sea level according to a predefined relationship of the reference thrust and the current airspeed, and operating the engine based on the determined value of the thrust setting parameter to provide the prescribed engine thrust.

In an embodiment of the above, determining the reference thrust corresponding to the value of the thrust setting parameter at sea level according to the predefined relationship comprises looking up the reference thrust that corresponds to the current airspeed and the value of the thrust setting parameter in a look-up table.

In another embodiment according to any of the previous embodiments, determining the value of the thrust setting parameter that provides the prescribed engine thrust at sea level according to the predefined relationship comprises looking up the value of the thrust setting parameter that corresponds to the prescribed thrust and the current airspeed in a look-up table.

In another embodiment according to any of the previous embodiments, the thrust setting parameter comprises a rotational speed of an engine shaft.

In another embodiment according to any of the previous embodiments, the thrust setting parameter comprises at least one of a measured engine operating temperature and a measured engine operating pressure.

In another embodiment according to any of the previous embodiments, calculating the adjustment factor is at least partially based on a measured ambient pressure at the current altitude and a determined ambient pressure at sea level.

According to another aspect of the present invention, a control system for an aircraft engine includes, among other possible things, a controller that includes a processor and a memory for storing engine operating settings that are indicative of a prescribed thrust based on a thrust setting parameter and an aircraft operating condition. The controller is programmed to receive information indicative of the thrust setting parameter and the aircraft operating condition from at least one sensor that is associated with an aircraft engine, to set the prescribed thrust at a selected aircraft operating parameter independent of a thrust setting model by determining a reference thrust that corresponds to a value of the thrust setting parameter at the selected aircraft operating parameter for a current aircraft operating parameter according to a predefined relationship in response to operation at a threshold aircraft operating condition, to calculate an adjustment factor based on a difference between a current aircraft operating parameter and the selected aircraft operating parameter, to determine the prescribed thrust at the current aircraft operating parameter by applying the adjustment factor to the reference thrust, and to determine a value of the thrust setting parameter that provides the prescribed thrust at the current aircraft operating parameter according to a predefined relationship of the reference thrust and a current airspeed. The controller is further programmed to operate the aircraft engine based on the determined value of the thrust setting parameter to provide the prescribed thrust.

In an embodiment of the above, the selected aircraft operating parameter comprises thrust at sea level and the threshold aircraft operating condition comprises operation at an altitude at or below sea level.

In another embodiment according to any of the previous embodiments, the thrust setting model is configured for determining a thrust based on a current altitude for altitudes above sea level and the prescribed thrust is determined independent of the thrust setting model to provide a constant thrust at altitudes at or below sea level.

In another embodiment according to any of the previous embodiments, the controller includes look-up tables including predefined relationships between the reference thrust, the thrust setting parameter and airspeed and the controller is further programmed to determine the reference thrust and the thrust setting parameter utilizing the look-up tables.

In another embodiment according to any of the previous embodiments, the thrust setting parameter comprises at least one of a rotational speed of an engine shaft, a measured engine operating temperature and a measured engine operating pressure.

Although the disclosed example embodiments have specific components shown in the illustrations, embodiments of this disclosure are not limited to those particular combinations. It is possible to use components or features from one of example embodiment in combination with features or components from another example embodiment.

These and other features disclosed herein can be best understood from the following specification and drawings, the following of which is a brief description.

## BRIEF DESCRIPTION OF THE DRAWINGS

Figure 1 is a schematic view of an example gas turbine engine and engine control system.
Figure 2 is schematic illustration of an example control system embodiment.
Figure 3 is a flow diagram illustrating an example method for setting engine thrust to remain constant below sea level.

## DETAILED DESCRIPTION

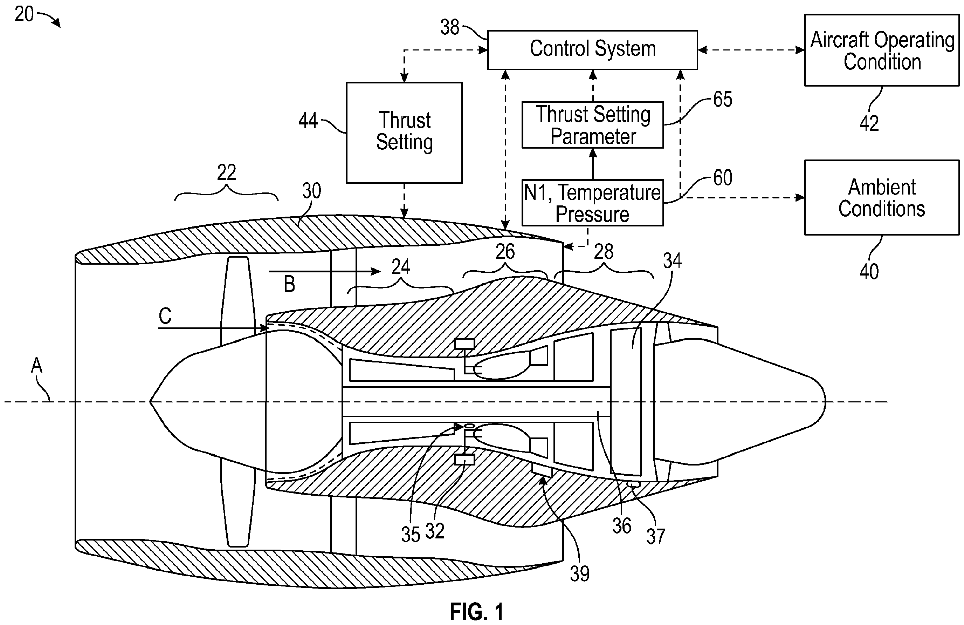

Figure 1 schematically illustrates a turbine engine assembly 20 including a control system 38 that defines an engine thrust setting 44. The example control system 38 determines the engine thrust setting 44 to provide a constant thrust instead of changing thrust based on current operating conditions. In one example embodiment, the engine thrust setting 44 is maintained constant for all altitudes at or below sea level.

The example turbine engine assembly 20 generally incorporates a fan section 22, a compressor section 24, a combustor section 26 and a turbine section 28 disposed along a common longitudinal axis A. The fan section 22 drives air along a bypass flow path B through nacelle 30, while the compressor section 24 drives air along a core flow path C for compression and communication into the combustor section 26. Compressed air flow communicated to the combustor section 26 is mixed with fuel from a fuel system 32 and ignited to generate an exhaust gas flow that drives rotation as it expands through the turbine section 28. The turbine section 28 is coupled to drive the compressor section 24 through at least one shaft 36. The shaft 36 may also drive the fan section 22. The turbine section 28 includes at least one rotor 34.

At least one temperature sensor 35 is provides temperature information for controlling engine operation based on temperature. At least one pressure sensor 39 is installed to provide pressure information for controlling engine operation based on pressure. At least one speed sensor 37 provides information indicative of a shaft speed. The disclosed engine assembly 20 is shown and described by way of example and other engine configurations, architectures and system are within the contemplation and scope of this disclosure.

Engine operating thrust varies based on ambient conditions 40 and aircraft operating conditions 42 and is modelled by a thrust setting model. The ambient conditions 40 include, among other possible things, atmospheric pressure, and ambient temperature. Aircraft operating conditions 42 may require engine thrust to be limited. Thrust is therefore, adjusted based on ambient and aircraft conditions 40, 42 by the engine control system 38.

Since thrust is not typically measured during aircraft operation, a thrust setting model is used to associate engine thrust to a measured engine operating parameter 60. The thrust setting model is incorporated in the engine control system 38 and defines the thrust setting 44 based on known relationships and/or by way of predefined lookup tables. One of the measured engine operating parameters 60 is used as a thrust setting parameter 65 and is monitored and controlled to provide the desired thrust. The thrust setting parameter 65 may be any one of the measured engine operating parameters 60 including, for example, a measured rotor/shaft speed (N1), an engine temperature, or a pressure at a location within the engine assembly 20.

Variations in thrust may correspond with ambient and aircraft conditions 40, 42 and thereby, the required thrust setting parameter 65 is utilized to set the desired thrust and varies with ambient and aircraft conditions 40, 42. The control system 38 determines a value for the thrust setting parameter 65 for a given set of ambient conditions 40 based on known relationships and/or by way of predefined lookup tables. Both performing calculations and using a look up table are within the contemplation of this disclosure. Moreover, other means and methods of determining a desired value for the thrust setting parameter 65 could be utilized and are within the contemplation of this disclosure.

Accordingly, for a given set of conditions 40, 42, the control system 38 defines settings for the thrust setting parameter 65 that provides the desired thrust at those conditions. The thrust setting 44 is then utilized to operate the engine assembly 20 within the defined settings.

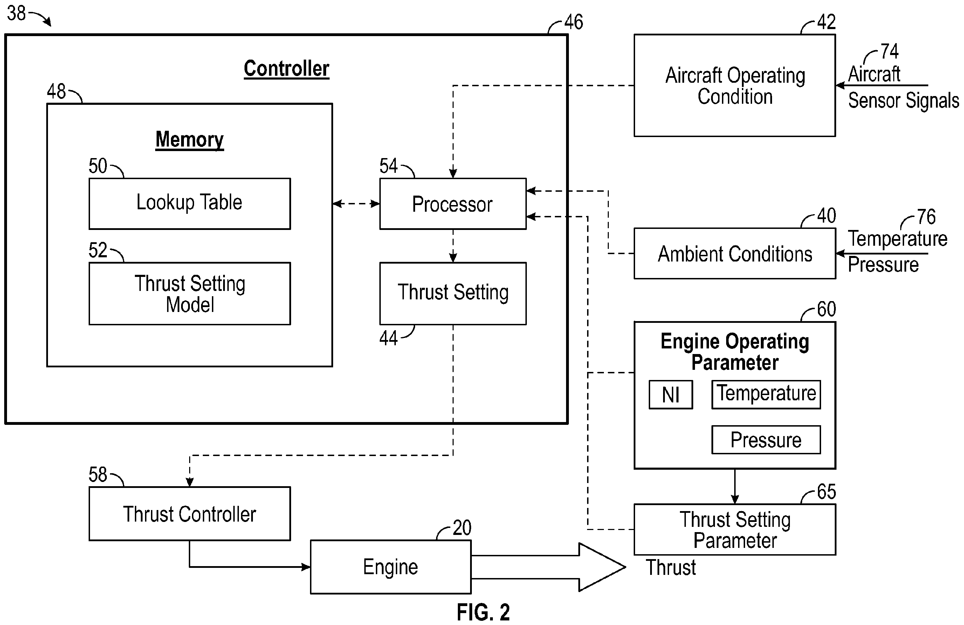

Referring to Figure 2, with continued reference to Figure 1, the control system 38 includes a controller 46 with a processor 54 and memory device 48. The example controller 46 relates to a device and system for performing necessary computing or calculation operations of the control system 38. The controller 46 may be specially constructed for operation of the control system 38, or it may comprise at least a general-purpose computer selectively activated or reconfigured by software instructions stored in the memory device 48. The controller 46 may further be part of full authority digital engine control (FADEC) or an electronic engine controller (EEC).

The software instructions may include a thrust setting model 52 that uses data stored in the memory device 48 in the form of lookup tables schematically indicated at 50 utilized by the processor 54 to define the thrust setting 44. The disclosed memory device 48, may include any one or combination of volatile memory elements (e.g., random access memory (RAM, such as DRAM, SRAM, SDRAM, VRAM, etc.) and/or nonvolatile memory elements (e.g., ROM, hard drive, tape, CD-ROM, etc.). The software instructions in the memory device 48 may include one or more separate programs, each of which includes an ordered listing of executable instructions for implementing logical functions. Software in memory, in whole or in part, is read by the processor 54, and executed to generate the thrust setting 44. The thrust setting 44 may be communicated and utilized by a thrust controller 58 to operate the engine according to the defined thrust setting 44.

The example thrust controller 58 includes all devices that operate to communicate with the engine assembly 20 to generate the thrust based on the thrust setting 44 determined by the processor 54 utilizing the example thrust setting model 52. The control system 38 receives information indicative of aircraft operating conditions 42 and ambient conditions 40. The information on aircraft operating conditions 42 may be provided by sensor signals 74 indicative of an aircraft operating condition including, among other possible things, aircraft offtakes, aircraft altitude and air speed. Information on ambient conditions 40 may be provided by sensor signals 76 from various sensors and systems that provide information including, among other possible things, ambient temperature, and atmospheric pressure. The sensor signals 74, 76 may be provided by one or more sensors or sensor systems disposed on the aircraft. Moreover, the sensor signals 74, 76 may be provided through communication with systems external to the aircraft. The controller 46 further receives information indicative of a value for at least one of the engine operating parameters 60 utilized as the thrust setting parameter 65.

The example thrust setting model 52 utilizes information gathered regarding the engine operating parameters 60, ambient conditions 40 and aircraft operating conditions 42 to determine a value of the thrust setting 44. The thrust setting model 52 automatically provides the thrust setting 44 that corresponds to the input conditions 40, 42 and 65 according to a defined algorithm. Deviation from the defined thrust setting model 52 for certain operating conditions can require substantial efforts and costs. Accordingly, the disclosed control system 38 provides an alternate means of determined the thrust setting 44 for select operating conditions independent of the thrust setting model 52.

In a disclosed example, a prescribed thrust is maintained at a value corresponding to sea level for all altitudes at or below sea level. It should be appreciated that although the disclosed example provides for maintaining a prescribed thrust at a value corresponding with operation at sea level, other altitudes could be utilized and are within the contemplation of this disclosure. Moreover, although the prescribed thrust is maintained with respect to a selected altitude, other aircraft operating parameters could also be utilized for setting the prescribed thrust and are within the contemplation and scope of this disclosure.

Maintaining a prescribed thrust at altitudes at or below sea level requires changes to the thrust setting parameter 65 that are not provided by the thrust setting model 52. For example, a constant rotor/shaft speed, N1, that provides a given amount of thrust at sea level will provide a different amount of thrust at different altitudes. Accordingly, maintaining a constant thrust corresponding to a thrust at sea level requires an adjustment to how the thrust setting parameter 65 is determined. The example control system 38 is configured to adjust values of the thrust setting parameter 65 to maintain a constant thrust for altitudes at or below sea level.

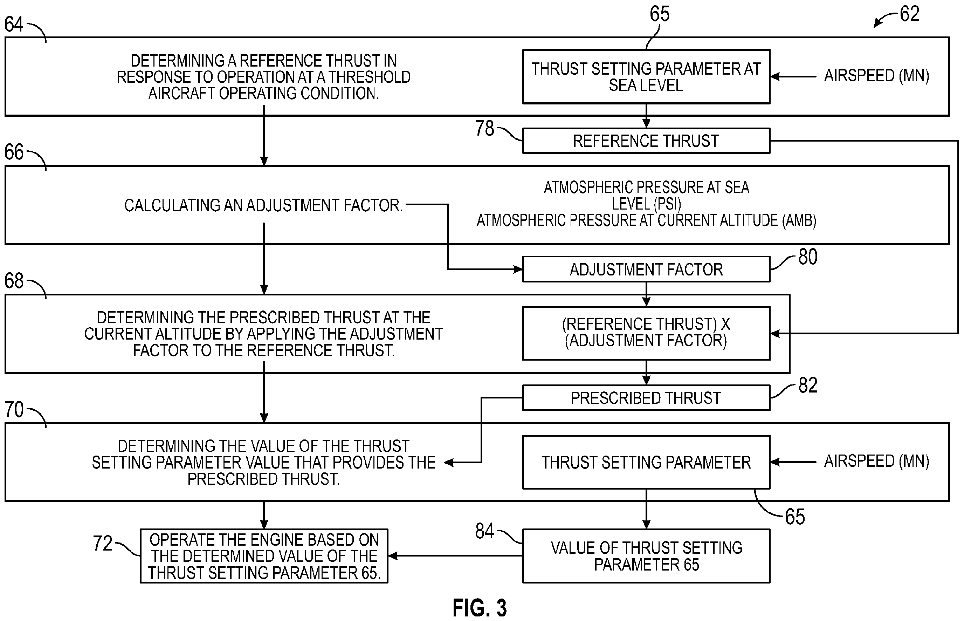

Referring to Figure 3 with continued reference to Figure 2, steps of an example process performed by the example control system 38 are schematically indicated at 62. The example control system 38 operates to provide the thrust setting 44 that corresponds with operation at sea level for altitudes below sea level. In other words, rather than changing thrust based on altitude as is performed for altitudes above sea level, the example control system 38 maintains the thrust at the sea level setting for all altitudes below sea level.

Although the example method is disclosed by way of example as maintaining thrust regardless of changes in altitude below sea level, thrust may be maintained at other predefined altitudes and/or for other conditions and remain within the contemplation and scope of this disclosure.

In one example embodiment, the setting for the thrust setting parameter 65 that provides a reference thrust at sea level is adjusted to current ambient conditions 40 below sea level. The example control system 38 compensates settings for the thrust setting parameter 65 to maintain the prescribed thrust for all altitudes below sea level. The control system 38 determines the setting of the thrust setting parameter 65 at sea level for similar operating conditions and determines an adjustment value that is applied to maintain the constant prescribed thrust.

In one example operational embodiment, the control system 38 first determines a reference thrust 78 at sea level that corresponds to a predefined setting of the thrust setting parameter 65 at sea level for a current air speed as is indicated at 64. In one example embodiment, the thrust setting parameter 65 is an engine rotor/shaft speed, N1. The desired thrust for various N1 speeds at a specified air speed is predefined in the lookup tables 50 stored in the memory 48 (Figure 2). In one disclosed example, the lookup table 50 includes data for the reference thrust and N1 at sea level for a given air speed. The controller 46 determines the reference thrust 78 at sea level based on the N1 speed at sea level from the thrust setting model 52 and the current air speed. The air speed is measured as a Mach number (MN) for current operating conditions.

The example method continues by calculating an adjustment factor that provides for adjusting the determined sea level reference thrust 78 based on the current altitude of the aircraft and is indicated at 66. In one example embodiment, the adjustment factor is determined, at least partially, by a calculation including a ratio of a pressure at sea level and a pressure at a current altitude below sea level. The pressure at sea level (Psl) is determined and utilized to determine the adjustment factor. The pressure at the current altitude (Pamb) is information continually determined and/or measured by sensors 76 and communicated to the control system 38. A ratio of Psl/Pamb is utilized as part of a relationship to determine an adjustment factor. In one disclosed embodiment, the adjustment factor 80 is determined by equation 1 provided below.

$$\text{Equation 1: Adjustment Factor} = (1 - (1 - Psl/Pamb))$$

Where:

Psl = Atmospheric pressure at sea level
Pamb = Atmospheric pressure at the current altitude.

The adjustment factor 80 provides for adjusting the reference thrust 78 based on the current altitude of the aircraft. Although Equation 1 is disclosed by way of example, the adjustment factor 80 may be determined utilizing other criteria indicative of differences between actual aircraft operating conditions and operating conditions at sea level. Moreover, additional variables may be utilized with Equation 1 to tailor the determination of the adjustment factor 80 to application specific factors. For example, aircraft specific features and/or unique ambient conditions may be compensated by additional variables and is within the contemplation and scope of this disclosure.

The determined adjustment factor 80 represents a relationship between operation at current conditions and operation at sea level. The relationship may also be represented as some percentage or fraction of the current reference condition.

Once the adjustment factor 80 is calculated, it is applied to the reference thrust 78 as indicated in step 68. Application of the adjustment factor 80 provides for the definition of a prescribed thrust 82. The prescribed thrust 82 represents the thrust for the current altitude that provides the thrust that would correspond to operation at sea level. As appreciated, the prescribed thrust 82 is the desired setting and is implemented by controlling the thrust setting parameter 65.

Once the prescribed thrust 82 is determined, a value of the thrust setting parameter 65 that provides prescribed thrust 82 is determined as indicated at 70. In one disclosed example, the rotor/shaft speed N1 is utilized as the thrust setting parameter 65 and is determined with the predefined data set provided as a lookup table 50. The prescribed thrust 82 is utilized with the predefined lookup tables 50 to determine a value 84 of the thrust setting parameter 65 that corresponds with the prescribed thrust 82. The value 84 of the thrust setting parameter 65 is then utilized for operation of the aircraft engine as is schematically indicated at 72. In one disclosed example, the value 84 of the thrust setting parameter 65 is a shaft/rotor speed, N1. In another disclosed example embodiment, the thrust setting parameter 65 may be a measured pressure and/or temperature at a location within the engine assembly 20.

The controller 46 repeats the method steps 62 to update the value 84 of the thrust setting parameter 65 for changes in aircraft operation including changes in altitude.

A method of controlling an aircraft engine 20 with an engine control system 38 to set a prescribed thrust 82 at a selected aircraft operating parameter independent of a thrust setting model 52 that determines thrust based on a current aircraft operating parameter according to a disclosed example embodiment includes, among other possible things, determining a reference thrust 78 that corresponds to a thrust setting parameter 65 at the selected aircraft operating parameter for a current airspeed according to a predefined relationship, calculating an adjustment factor 80 based on a relationship between the current aircraft operating parameter and the selected aircraft operating parameter, determining the prescribed thrust 82 at the current aircraft operating parameter by applying the adjustment factor 80 to the reference thrust 78, determining a value of the thrust setting parameter 65 that provides the prescribed thrust 82 at the current aircraft operating parameter according to a predefined relationship between the reference thrust 78 and the current airspeed, and operating the engine 20 based on the determined value of the thrust setting parameter 65 to provide the prescribed thrust 82.

In a further embodiment of the foregoing method, the selected aircraft operating parameter includes a sea level altitude and the current aircraft operating parameter includes the current altitude.

In a further embodiment of any of the foregoing methods, the thrust setting model 52 is configured for determining a thrust based on the current altitude for altitudes above sea level and the prescribed thrust 82 is determined independent of the thrust setting model 52 to provide a constant thrust for altitudes below sea level.

In a further embodiment of any of the foregoing, the method further includes determining the thrust based on the thrust setting model 52 in response to the aircraft operating at an altitude above sea level.

In a further embodiment of any of the foregoing methods, determining the reference thrust 78 corresponds to the thrust setting parameter 65 according to a predefined relationship includes looking up the reference thrust 78 that corresponds to the current air speed, and the thrust setting parameter 65 in a look-up table 50.

In a further embodiment of any of the foregoing methods, determining the thrust setting parameter 65 value that corresponds with the prescribed thrust 82 at the current airspeed includes looking up the thrust setting parameter 65 value that corresponds with the prescribed thrust 82 at the current airspeed in a look-up table 50.

In a further embodiment of any of the foregoing methods, the thrust setting parameter 65 includes a rotational speed of an engine shaft 36.

In a further embodiment of any of the foregoing methods, the thrust setting parameter 65 includes at least one of a measured engine operating temperature and a measured engine operating pressure.

In a further embodiment of any of the foregoing methods, calculating the adjustment factor 80 is based on a measured ambient pressure at the current altitude and a determined ambient pressure at sea level.

A method of controlling an aircraft engine 20 with an engine control system 38 to maintain a prescribed engine thrust 82 at a value that corresponds to operation at sea level independent of a current altitude of an aircraft according to another disclosed example embodiment includes, among other possible things, determining a reference thrust 78 that corresponds to a value of a thrust setting parameter 65 at sea level for a current air speed according to a predefined relationship in response to operation below sea level, calculating an adjustment factor 80 based on a relationship between a current altitude and sea level, determining the prescribed engine thrust 82 at the current altitude by applying the adjustment factor 80 to the reference thrust 78, determining the value of the thrust setting parameter 65 that provides the prescribed engine thrust 82 at sea level according to a predefined relationship of the reference thrust 78 and the current airspeed, and operating the engine 20 based on the determined value of the thrust setting parameter 65 to provide the prescribed engine thrust 82.

In a further embodiment of the foregoing method, determining the reference thrust 78 that corresponds to the value of the thrust setting parameter 65 at sea level according to a predefined relationship includes looking up the reference thrust 78 that corresponds to the current airspeed and the value of the thrust setting parameter 65 in a look-up table 50.

In a further embodiment of any of the foregoing methods, determining the value of the thrust setting parameter 65 that provides the prescribed engine thrust 82 at sea level according to the predefined relationship includes looking up the value of the thrust setting parameter 65 that corresponds to the prescribed thrust 82 and the current airspeed in a look-up table 50.

In a further embodiment of any of the foregoing methods, the thrust setting parameter 65 includes a rotational speed of an engine shaft 36.

In a further embodiment of any of the foregoing methods, the thrust setting parameter 65 includes at least one of a measured engine operating temperature and a measured engine operating pressure.

In a further embodiment of any of the foregoing methods, calculating the adjustment factor 80 is at least partially based on a measured ambient pressure at the current altitude and a determined ambient pressure at sea level.

A control system 38 for an aircraft engine 20 according to another disclosed example embodiment includes, among other possible things, a controller 46 that includes a processor 54 and a memory 48 for storing engine operating settings that are indicative of a prescribed thrust 82 based on a thrust setting parameter 65 and an aircraft operating condition, the controller 46 is programmed to receive information indicative of the thrust setting parameter 65 and the aircraft operating condition from at least one sensor 35, 37 and 39 that is associated with an aircraft engine 20, to set the prescribed thrust 82 at a selected aircraft operating parameter independent of a thrust setting model 52 by determining a reference thrust 78 that corresponds to a value of the thrust setting parameter 65 at the selected aircraft operating parameter for a current aircraft operating condition according to a predefined relationship in response to operation at a threshold aircraft operating condition, to calculate an adjustment factor 80 based on a difference between a current aircraft operating parameter and the selected aircraft operating parameter, to determine the prescribed thrust 82 at the current aircraft operating parameter by applying the adjustment factor 80 to the reference thrust 78, and to determine a value of the thrust setting parameter that provides the prescribed thrust 82 at the current aircraft operating parameter according to a predefined relationship of the reference thrust 78 and a current airspeed, and to operate the aircraft engine 20 based on the determined value of the thrust setting parameter 65 to provide the prescribed thrust 82.

In a further embodiment of the foregoing control system, the selected aircraft operating parameter includes a sea level altitude and the threshold aircraft operating condition includes operation at an altitude at or below sea level.

In a further embodiment of any of the foregoing control systems, the thrust setting model 52 is configured for determining a thrust based on a current altitude for altitudes above sea level and the prescribed thrust 82 is determined independent of the thrust setting model 52 to provide a constant thrust at altitudes at or below sea level.

In a further embodiment of any of the foregoing control systems, the controller 46 includes look-up tables 50 that include predefined relationships between the reference thrust 78, the thrust setting parameter 65 and airspeed and the controller 46 is further programmed to determine the reference thrust 78 and the thrust setting parameter 65 utilizing the look-up tables 50.

In a further embodiment of any of the foregoing control systems, the thrust setting parameter 65 includes at least one of a rotational speed of an engine shaft 36, a measured engine operating temperature and a measured engine operating pressure.

Accordingly, the example control system 38 and method provides a constant prescribed thrust 82 for all altitudes below sea level that corresponds to a thrust at sea level for current operating conditions.

Although an example embodiment has been disclosed, a worker of ordinary skill in this art would recognize that certain modifications would come within the scope of this disclosure. For that reason, the following claims should be studied to determine the scope and content of this disclosure.

**Claims**

1. A method of controlling an aircraft engine (20) with an engine control system (38) to set a prescribed thrust at a selected aircraft operating parameter independent of a thrust setting model that determines thrust based on a current aircraft operating parameter comprising:

determining a reference thrust corresponding to a thrust setting parameter at the selected aircraft operating parameter for a current airspeed according to a predefined relationship;

calculating an adjustment factor based on a relationship between the current aircraft operating parameter and the selected aircraft operating parameter;

determining the prescribed thrust at the current aircraft operating parameter by applying the calculated adjustment factor to the reference thrust;

determining a value of the thrust setting parameter that provides the prescribed thrust at the current aircraft operating parameter according to a predefined relationship between the reference thrust and the current airspeed; and

operating the aircraft engine (20) based on the determined value of the thrust setting parameter to provide the prescribed thrust.

2. The method as recited in claim 1, wherein the selected aircraft operating parameter comprises a sea level altitude and the current aircraft operating parameter comprises the current altitude.

3. The method as recited in claim 1 or 2, wherein the thrust setting model is configured for determining a thrust based on the current altitude for altitudes above sea level and the prescribed thrust is determined independent of the thrust setting model to provide a constant thrust for operation at altitudes below sea level.

4. The method as recited in any preceding claim, further comprising determining the thrust based on the thrust setting model in response to the aircraft operating at an altitude above sea level.

5. The method as recited in any preceding claim, wherein determining the reference thrust corresponding to the thrust setting parameter for a current airspeed according to the predefined relationship comprises looking up the reference thrust that corresponds to the current air speed, and the thrust setting parameter in a look-up table.

6. The method as recited in any preceding claim, wherein determining the thrust setting parameter value that corresponds with the prescribed thrust at the current airspeed comprises looking up the thrust setting parameter value that corresponds with the prescribed thrust at the current airspeed in a look-up table.

7. The method as recited in any preceding claim, wherein the thrust setting parameter comprises:

a rotational speed of an engine shaft (36); and/or
at least one of a measured engine operating temperature and a measured engine operating pressure.

8. The method as recited in any preceding claim, wherein calculating the adjustment factor is based on a measured ambient pressure at the current altitude and a determined ambient pressure at sea level.

9. A method of controlling an aircraft engine (20) with an engine control system (38) to maintain a prescribed engine thrust at a value corresponding to operation at sea level independent of a current altitude of an aircraft comprising:

determining a reference thrust corresponding to a value of a thrust setting parameter at sea level for a current air speed according to a predefined relationship in response to operation at an altitude below sea level;

calculating an adjustment factor based on a relationship between a current altitude and sea level;

determining the prescribed engine thrust at the current altitude by applying the calculated adjustment factor to the reference thrust;

determining the value of the thrust setting parameter that provides the prescribed engine thrust at sea level according to a predefined relationship of the reference thrust and the current airspeed; and

operating the aircraft engine (20) based on the determined value of the thrust setting parameter to provide the prescribed engine thrust, optionally wherein calculating the adjustment factor is at least partially based on a measured ambient pressure at the current altitude and a determined ambient pressure at sea level.

10. The method as recited in claim 9, wherein:

determining the reference thrust corresponding to the value of the thrust setting parameter at sea level according to the predefined relationship comprises looking up the reference thrust that corresponds to the current airspeed and the value of the thrust setting parameter in a look-up table; and/or

determining the value of the thrust setting parameter that provides the prescribed engine thrust at sea level according to the predefined relationship comprises looking up the value of the thrust setting parameter that corresponds to the prescribed thrust and the current airspeed in a look-up table.

11. The method as recited in claim 9 or 10, wherein the thrust setting parameter comprises:

a rotational speed of an engine shaft (36); and/or
at least one of a measured engine operating temperature and a measured engine operating pressure.

12. A control system (38) for an aircraft engine (20) comprising:
a controller (46) including a processor (54) and a memory (48) for storing engine operating settings indicative of a prescribed thrust based on a thrust setting parameter and an aircraft operating condition, wherein the controller (46) is programmed:

to receive information indicative of the thrust setting parameter and the aircraft operating condition from at least one sensor (35, 37, 39) associated with an aircraft engine (20);
to set the prescribed thrust at a selected aircraft operating parameter independent of a thrust setting model by determining a reference thrust corresponding to a value of the thrust setting parameter at the selected aircraft operating parameter for a current aircraft operating parameter according to a predefined relationship in response to operation at a threshold aircraft operating condition, calculating an adjustment factor based on a difference between a current aircraft operating parameter and the selected aircraft operating parameter, determining the prescribed thrust at the current aircraft operating parameter by applying the calculated adjustment factor to the reference thrust, and determining a value of the thrust setting parameter that provides the prescribed thrust at the current aircraft operating parameter according to a predefined relationship of the reference thrust and a current airspeed; and
to operate the aircraft engine (20) based on the determined value of the thrust setting parameter to provide the prescribed thrust, optionally wherein the selected aircraft operating parameter comprises thrust at sea level and the threshold aircraft operating condition comprises operation at an altitude at or below sea level.

13. The control system (38) as recited in claim 12, wherein the thrust setting model is configured for determining a thrust based on a current altitude for altitudes above sea level and the prescribed thrust is determined independent of the thrust setting model to provide a constant thrust at altitudes at or below sea level.

14. The control system (38) as recited in claim 12 or 13, wherein the controller (46) includes look-up tables including predefined relationships between the reference thrust, the thrust setting parameter and airspeed and the controller (46) is further programmed to determine the reference thrust and the thrust setting parameter utilizing the look-up tables.

15. The control system (38) as recited in any of claims 12 to 14, wherein the thrust setting parameter comprises at least one of a rotational speed of an engine shaft (36), a measured engine operating temperature and a measured engine operating pressure.

**FIG. 1**

FIG. 2

EP 4 455 469 A2

64 — DETERMINING A REFERENCE THRUST IN RESPONSE TO OPERATION AT A THRESHOLD AIRCRAFT OPERATING CONDITION.

65 — THRUST SETTING PARAMETER AT SEA LEVEL ← AIRSPEED (MN)

62

78 — REFERENCE THRUST

66 — CALCULATING AN ADJUSTMENT FACTOR.

ATMOSPHERIC PRESSURE AT SEA LEVEL (PSI)
ATMOSPHERIC PRESSURE AT CURRENT ALTITUDE (AMB)

ADJUSTMENT FACTOR 80

68 — DETERMINING THE PRESCRIBED THRUST AT THE CURRENT ALTITUDE BY APPLYING THE ADJUSTMENT FACTOR TO THE REFERENCE THRUST.

(REFERENCE THRUST) X (ADJUSTMENT FACTOR)

PRESCRIBED THRUST 82

70 — DETERMINING THE VALUE OF THE THRUST SETTING PARAMETER VALUE THAT PROVIDES THE PRESCRIBED THRUST.

THRUST SETTING PARAMETER ← AIRSPEED (MN)

65

72 — OPERATE THE ENGINE BASED ON THE DETERMINED VALUE OF THE THRUST SETTING PARAMETER 65.

84 — VALUE OF THRUST SETTING PARAMETER 65

FIG. 3